# EUROPEAN PATENT SPECIFICATION

(11) **EP 3 590 816 B1**
(45) Date of publication and mention of the grant of the patent: **17.11.2021**
(21) Application number: 19184002.4
(22) Date of filing: 02.07.2019
(51) Int. Cl.: B62M 25/08, B62K 23/00, B62K 23/06

(54) **CONTROL DEVICE OF A BICYCLE FIXED TO ITS HANDLEBAR**
STEUERUNGSVORRICHTUNG EINES FAHRRADS BEFESTIGT AM LENKER
DISPOSITIF DE COMMANDE D'UN VÉLO FIXÉ À SON GUIDON

(30) Priority: 03.07.2018 IT 201800006887
(43) Date of publication of application: 08.01.2020
(73) Proprietor: Campagnolo S.r.l., 36100 Vicenza (VI) (IT)
(72) Inventor: TASONIERO, Bruno, I-37030 Roncà (Verona) (IT)
(74) Representative: Porta & Consulenti Associati S.p.A.

(56) References cited:
- EP-A1- 1 911 668
- EP-A2- 2 082 953
- FR-A1- 2 777 528
- TW-A- 201 801 978

## Description

The present invention relates to a control device for a bicycle. In particular, the invention relates to a control device used to operate and control a plurality of bicycle equipments.

More in particular, the control device of the present invention is intended to be used in a racing bicycle, namely in a bicycle the handlebar of which has opposite curved free end portions.

The invention also relates to an electronic device for a bicycle comprising the aforementioned control device and a bicycle that comprises said electronic device.

Known control devices for racing bicycles are associated with the curved portions of the handlebar of the bicycle, one on the right and one on the left, to allow gripping by the cyclist in order to ride the bicycle, as an alternative to gripping on the classic handgrip provided on the curved portions of the handlebar, and the simultaneous operation/control of one or more equipments of the bicycle, like for example a brake (for the front or rear wheel) and a gearshift group (front or rear).

In the rest of the present description and in the following claims, the spatial terms, in particular the terms front, rear, side, upper, lower, vertical and horizontal, are used with reference to the mounted condition of the control device on the handlebar of the bicycle. The terms inner and outer, on the other hand, with reference to the handlebar in neutral position, identify the zone towards the center of the handlebar and the zone opposite to the center of the handlebar with respect to an intermediate reference plane that substantially vertically crosses the control device.

The control devices that allow plural equipments to be controlled are commonly called integrated controls.

Known integrated controls typically comprise a support body intended to be fixed onto the handlebar of the bicycle so as to project in front of it. The support body is shaped so as to facilitate gripping by the cyclist in particular situations. It thus has an ergonomic shape, typically comprising, in its front area, a protuberance that extends upwards. The support body is usually mounted on the curved portions of the handlebar through conventional connection means, for example through a strap. The support body is associated with one or more manual command input elements or manual command members of respective equipments of the bicycle.

An assembly for controlling a gearshift and a brake is for example described in application US 2002/0020246 to the same Applicant.

Patent US 6 142 281 to the same Applicant describes a control unit of a gearshift that comprises a support body.

Patent FR 2 777 528 describes a support handgrip of the brake lever that comprises a body elongated forwards continuously by a horn the section of which reduces towards its end. In an embodiment, an electric rear derailleur is provided. A first control switch of the derailleur is positioned at the end of the horn and a second switch of the same type is provided on the brake lever.

Patent US 7 679 494 relates to a display for displaying the amount of adjustment of the transmission position of a transmission device. The display is mounted on a support element mounted on an end portion of a brake lever.

Application TW 2018 01978, disclosing the features of the preamble of claim 1, relates to a covering sheath of a handlebar that includes a flexible display for displaying information in real time. A side wall of the sheath comprises a detection portion that comprises a switch and at least one sensor that, when activated by the movements of the hand of the cyclist, sends sensor signals to a central controller. Based on the signal received, a control function, such as a gear change or an adjustment of the height of the seat post, is carried out.

The Applicant has for years produced and commercialized integrated controls that provide a brake lever for controlling the brake of the front or rear wheel and two control members that allow control in the two respective gearshifting directions, upwards and downwards. The brake lever is arranged conventionally, whereas a control member of the gearshift, in particular a gearshift lever, is arranged behind the brake lever and the other control member of the gearshift, usually a lever or a button, is positioned on the side surface of the support body to allow easy operation even when the cyclist rides by gripping the support body of the integrated control.

EP 1 911 668 A1 describes a bicycle handlebar assembly comprising a handlebar; a first gearshift operating part attached to a first end portion of the handlebar with the first gearshift operating part electrically controlling a front derailleur to selectively perform a first gearshift operation; and a second gearshift operating part attached to the first end portion of the handlebar with the second gearshift operating part being electrically controlling a rear derailleur to selectively perform a second gearshift operation. The assembly comprises a brake operating device attached to the first end portion of the handlebar, the first and second gearshift operating parts being attached to the brake operating device.

EP 2 082 953 A2 relates to a bicycle control device with a bracket member, a brake lever and a non-shifting control switch, which can be used to operate an infrequently operated electrical device, and it is disposed on a main body of the bracket member in an area of the upper surface of the main body.

In some of these integrated controls, the Applicant has provided for inserting a further control member, e.g. a button, to control the operating mode of a display mounted on the handlebar, for example a display of a cycle-computer. As described in the aforementioned application US 2002/0020246, the button for the display is mounted on the inner side wall of the support body, above the second gearshift lever to be able to maneuver the button with the thumb and at the same time to prevent an undesired movement of the gearshift lever.

The Applicant has thought of providing, in the integrated control, a further control member for the actuation of a further actuator device in addition to the brake and the gearshift.

The Applicant has observed that document TW 2018 01978 describes an integrated control comprising a control member of a further actuator device with respect to the brake lever, in particular an actuator device for adjusting the height of the seat post. Such a control member is arranged on the inner side wall of the integrated control. However, the Applicant has observed that when on such a wall there is also a control member of the gearshift, like in the integrated controls of the Applicant, the arrangement of the further control member and of the control member of the gearshift in the same side wall of the integrated control entails the risk of accidental actuation of each of them. Such accidental actuation could have negative consequences on travel since both the further control member and the control member of the gearshift actuate an actuator device that influences the travel of the bicycle and/or the stance of the cyclist on it.

The Applicant has thus considered arranging the further control member far from the other control members, such as the control members of the gearshift and of the brake, in a position that in any case allows easy actuation of the further actuator device.

In accordance with a first aspect of the present invention, a control device for a bicycle is defined in claim 1.

The arrangement of one or more control members for actuating a third actuator device on the front protuberance of the support body makes it possible to easily manage, in a controlled manner, the relevant functions of the bicycle. For example, it is not necessary to remove the hand from the support body to control such an actuator device.

In the present description and in the following claims the term actuator device is meant to indicate, in accordance with the common interpretation of the term, a mechanical, electrical, electronic, electromechanical, hydraulic, pneumatic device, etc., which is adapted for carrying out a certain action for the movement of a component of the bicycle, obeying an electrical or electronic control signal or a manual command.

In the rest of the present description and in the following claims, when reference is made to the "reference plane", it is meant to indicate any substantially horizontal plane that passes through the support body of the control device, not necessarily a plane of symmetry or a middle plane of such a support body.

Preferably, the control device comprises a control unit housed in an inner part of the support body.

More preferably, said control unit is configured to acquire control signals generated by the actuation of at least said at least one third manual control member.

Preferably, the control device further comprises a visual indicator housed in the upper part of the support body and arranged on the protuberance near to said at least one third manual control member.

More preferably, said visual indicator is a display.

The provision of a control unit in the support body for processing and, possibly, displaying the received control signals makes it possible to make the support body an adaptable module to the connection with further central control systems and to simplify the connection towards possible devices external to the support body.

Preferably, said visual indicator is connected to said control unit.

More preferably, said control unit is configured to process at least one of the acquired control signals and transmit to said visual indicator a signal for displaying at least information linked to a state of actuation of said at least one third actuator device.

Preferably, said protuberance comprises an upper wall, a rear wall facing towards the rear end of the support body and a front wall opposite to the rear wall.

More preferably, said at least one third manual control member is arranged on the upper wall or on the front wall of the protuberance.

Preferably, said visual indicator is arranged on the upper part or on the rear wall of the protuberance.

The positioning of the third manual control member is thus such that it is easily operated by the cyclist when the cyclist grips the control device and part of the palm of his hand rests on the upper transversal wall of the support body, without it being necessary to remove the hand from the control device to carry out such operation, and thus being able to maintain the control of the other two or more manual control members.

Preferably, the support body of the first control device and/or of the second control device comprises a front wall, opposite the rear end and facing in the direction of travel when the support body is mounted on the handlebar, an outer side wall with respect to an intermediate plane P that vertically crosses the support body, an inner side wall, arranged on the opposite side to the outer side wall, an upper transversal wall that connects together the outer and inner side walls and a lower transversal wall opposite to the upper transversal wall.

Preferably, all of the walls are joined so as to form a single body.

Preferably, the protuberance extends upwards in a generically transversal direction, preferably perpendicular, with respect to the reference plane.

Preferably, the upper transversal wall of the support body comprises a first wall portion that extends between the rear end and the protuberance, a second wall portion that extends upwards at the protuberance and that faces towards the rear end of the support body, and a third wall portion that connects the second upper transversal wall portion to the front wall.

Preferably, the second upper transversal wall portion defines the rear wall, facing towards the rear end, of the protuberance and the third wall portion defines the upper wall of the protuberance.

Preferably, the fourth manual control member is arranged on the upper wall or on the front wall of the protuberance.

The positioning of the fourth manual control member is thus such as to allow obtaining the same advantages discussed above with reference to the third manual control member to be obtained.

Preferably, the fourth manual control member is configured to generate, once actuated, control signals that are transmitted to the control unit.

In the preferred embodiments of the invention:
- the first manual control member is a manual brake control member for actuating a braking actuator device, the manual brake control member extending downwards with respect to the reference plane, and
- the second manual control member is a manual gearshifting control member for actuating a gearshifting actuator device.

Preferably, the second manual control member comprises at least one gearshift lever arranged on a side wall of the first support body.

In some preferred embodiments, the second manual control member comprises a first gearshift lever and a second gearshift lever or button for actuating a single gearshifting actuator device.

In further embodiments, the actuation of the gearshifting actuator device can also be carried out by suitably moving the brake lever.

Preferably, the control device further comprises a fifth manual control member of a further display device or of a data transmitting/receiving device.

More preferably, said fifth manual control member is associated with the lower part of the support body.

Preferably, such a further display device is fixed to the handlebar of the bicycle in a different position from that with which the control device is associated.

In preferred embodiments of the invention, a first control device for a bicycle in accordance with the first aspect of the invention is adapted for being fixed at a left end of a handlebar of said bicycle and a second control device for a bicycle in accordance with the first aspect of the invention is adapted for being fixed at a right end of a handlebar of said bicycle.

In this way, the control of the bicycle and of the various manual control members by the cyclist is facilitated.

Preferably, the control unit of the first control device is connected to the control unit of the second control device.

Preferably, the control unit of the second control device is configured to acquire control signals generated by the actuation of the third manual control member of the second control device and transmit said control signals to the control unit of the first control device.

Preferably, the control unit of the second control device is configured to process at least one of the acquired control signals and transmit to the visual indicator of the first control device or of the second control device a signal for displaying at least information linked to a state of actuation of said at least one third actuator device.

In the case in which the control unit of the second control device transmits the control signals to the visual indicator of the first control device, the first control unit is configured to receive and process such control signals and transmit a signal to the visual indicator of the first control device.

In a second aspect thereof, the invention relates to an electric device for a bicycle comprising:
- a control device for a bicycle in accordance with the first aspect of the invention,
- a first actuator device connected to the first manual control member,
- a second actuator device connected to the second manual control member,
- at least one third actuator device connected to said at least one third manual control member.

Preferably, such an electronic device, individually or in combination, has all of the structural and functional features discussed above with reference to the control device of the invention and therefore allows all of the aforementioned advantages to be obtained.

Preferably, said at least one third manual control member is connected to said at least one third actuator device and is configured to select one among a plurality of states of actuation of said at least one third actuator device.

In preferred embodiments of the electric device, said at least one fourth manual control member is also connected to said at least one third actuator device.

Preferably, the third manual control member is configured to select a progression of states of actuation of said at least one third actuator device and the fourth manual control member is configured to select an inverse progression of states of actuation of said at least one third actuator device.

Preferably, the electric device comprises a fourth actuator device connected to the fourth manual control member.

Preferably, said at least one third actuator device and/or said fourth actuator device is selected among the group consisting of: an electric propulsion actuator, a saddle configuration adjuster, a configuration adjuster of a damper and a direction indicator.

In the preferred embodiments of the invention, the third manual control member of the control device adapted for being fixed at one of the left/right end of the handlebar is configured to select a progression of states of actuation of said at least one third actuator device and the third manual control member of the control device adapted for being fixed at the other right/left end of the handlebar is configured to select an inverse progression of states of actuation of said at least one third actuator device.

The Applicant has observed that the provision of two manual control members arranged on two separate control devices facilitates the adjustment of the states of actuation of the third actuator device, improving the control thereof.

Preferably, said at least one third actuator device is an electric propulsion actuator and said plurality of states of actuation comprises a plurality of power levels delivered by said electric propulsion actuator.

More preferably, each of such power levels corresponds to a respective level of pedal assistance selected following the activation of the third manual control member and/or of the fourth manual control member.

Preferably, the electronic device further comprises a battery for powering the third actuator device.

Preferably, at least one among the visual indicator of the first control device and the visual indicator of the second control device is configured to display information relative to the residual charge of the battery.

In a further aspect thereof, the present invention relates to a bicycle comprising the electronic device described above.

Preferably, such a bicycle singularly or in combination has all of the structural and functional features discussed above with reference to the control device and to the electronic device of the present invention and therefore it has all of the aforementioned advantages.

Further features of the present invention will become clear from the following detailed description of some preferred embodiments thereof, made with reference to the attached drawings. In such drawings:
- figure 1 schematically illustrates a perspective view of a pedal assisted bicycle that comprises a control device according to an embodiment of the present invention;
- figure 2 is a perspective view of the handlebar of the bicycle of figure 1;
- figure 3 is a side view of the handlebar of figure 2, and
- figure 4 is a block diagram of the electric and electronic part of the control device of the present invention.

In particular, an embodiment of the present invention is being described, in which the third actuator device is an electric propulsion actuator device.

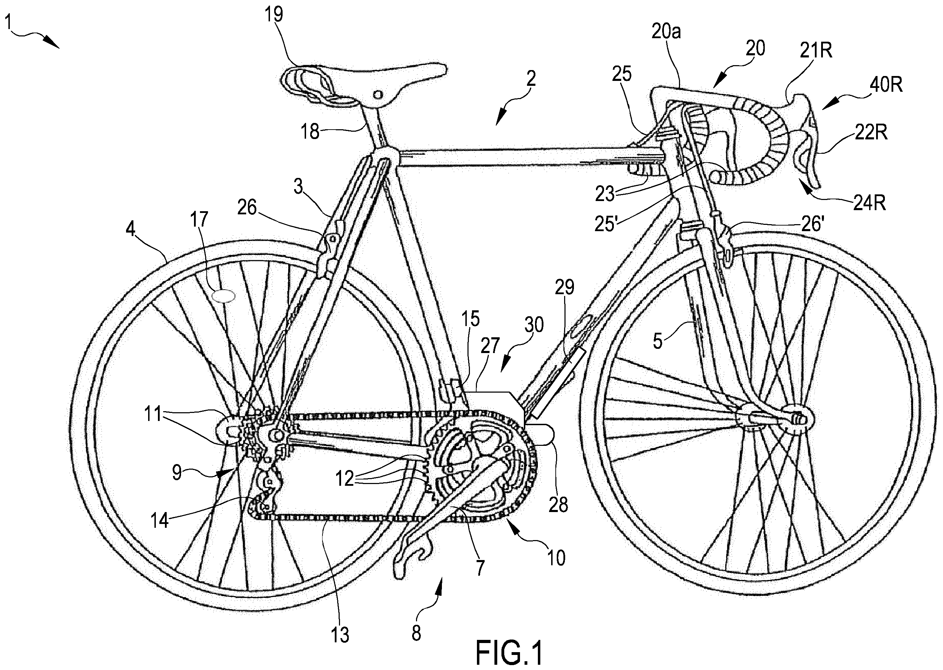

With reference to figure 1, a pedal assisted bicycle 1, in particular a racing bicycle, includes a frame 2 formed in a known way by tubular elements defining a support structure 3 for a rear wheel 4 and a fork 5 for a front wheel 6. A handlebar 20 having a tubular structure is operatively connected to the fork 5 and to the frame 2.

The frame 2, at its lower portion, supports a bottom bracket shell with which two pedals 7 are associated, to operate the rear wheel 4 through a gearshift, indicated in general with reference numeral 8. In the preferred embodiments, each gearshift is electronically servo-assisted. However, the present invention also contemplates embodiments in which the gearshift is of the mechanical type.

The gearshift 8 comprises a rear gearshift group 9 and a front gearshift group 10. The rear gearshift group 9 includes a plurality of toothed wheels or sprockets 11, having different diameters and coaxial with the axis of the hub of the rear wheel 4. The front gearshift group 10 includes a plurality of toothed wheels or crowns 12, having different diameters and coaxial with the shaft of the bottom bracket assembly.

The toothed wheels 11 of the rear gearshift group 9 and the toothed wheels 12 of the front gearshift group 10 can be selectively engaged by a motion transmitting chain 13, to supply the different gear ratios available, through the gearshift 8.

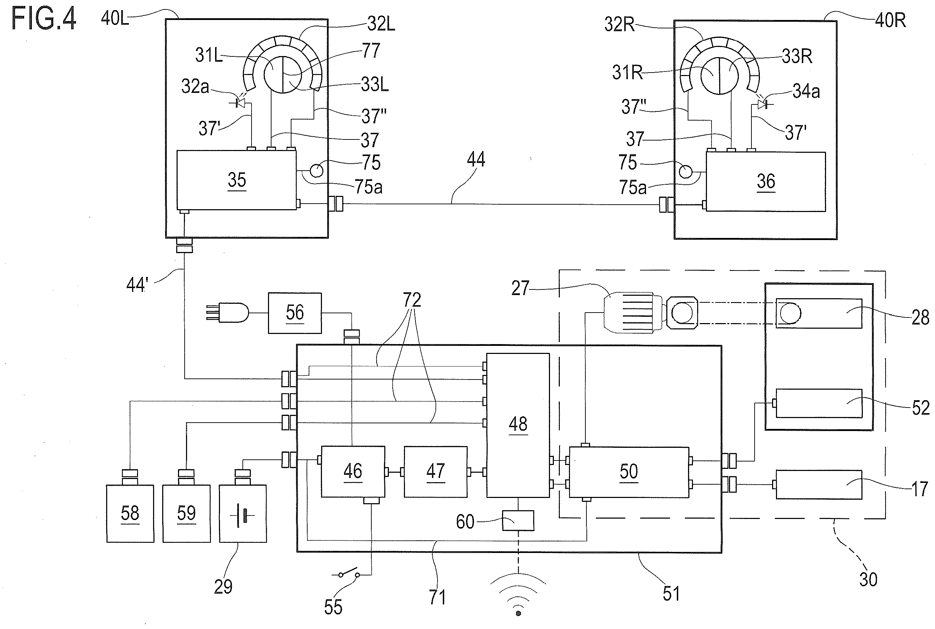

The different gear ratios for the rear gearshift 9 and the front gearshift 10 are obtained by actuating a respective rear and front gearshifting actuator device 58, 59 (partially visible in figure 1 and indicated in figure 4).

The rear gearshifting actuator device 58 comprises a rear derailleur 14 that comprises a chain guide element or rear cage (not visible in figure 1), movable between the toothed wheels 11 by means of the movement of a suitable operation linkage. The operation linkage can be an articulated parallelogram. Alternatively, it is possible to use other types of linkage well known in the field, for example a rack or worm screw system.

Similarly, the front gearshifting actuator device 59 comprises a front derailleur 15 that comprises a chain guide element or front cage (not visible in figure 1), movable between the toothed wheels 12 by means of the movement of a suitable operation linkage.

The details of the construction of the derailleurs 14, 15 are not described since they are *per se* known and the present invention does not concern itself with their specific construction.

In a *per se* well known way, in the case of a mechanical gearshifting actuator device, the movement of the operation linkage of the derailleur (front and/or rear) is controlled through the traction and release of an inextensible cable, usually sheathed (Bowden cable), not visible in the figures.

Again in a *per se* well known way, in the case of an electronically servo-assisted gearshift, briefly electronic gearshift, the gearshifting actuator device 58, 59 is an electromechanical device that comprises a controller 48 of an electric gearshifting motor (not shown in figure 1), typically equipped with a gearbox, which controls the movement of the operation linkage of the derailleur.

The bicycle 1 comprises a handlebar 20, which in the embodiment of the figures is of the drop bar type and comprises a handlebar rod 20a provided at its two end with respective handgrips 23 extending downwards and curved, with the convexity facing forwards, in the direction of travel.

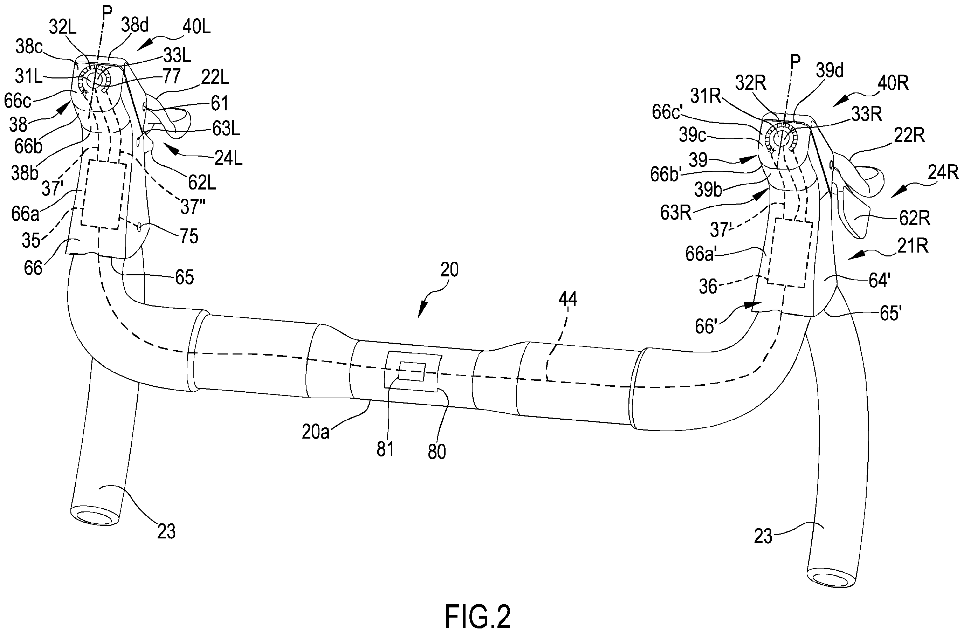

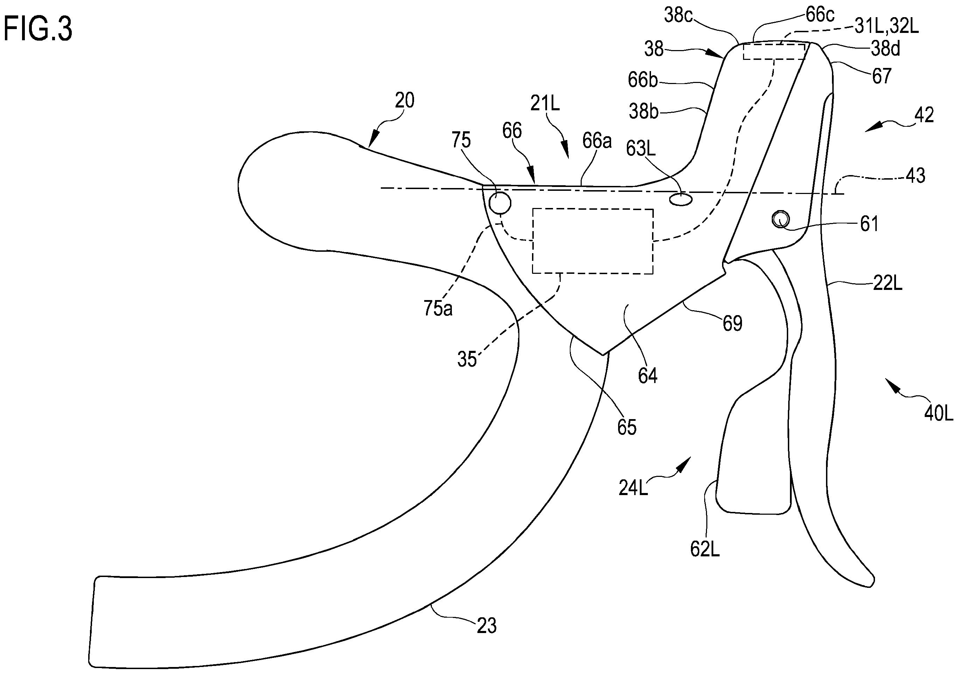

Figure 2 is a perspective view from above of the handlebar 20, on which left and right control devices 40L and 40R, also indicated hereinafter with first control device and second control device, are mounted, each at a respective handgrip 23. The two control devices are arranged substantially symmetrically with respect to the longitudinal middle plane of the bicycle 1, transversal to the handlebar rod 20a. Figure 3 is a side view of the left control device 40L, which substantially mirrors the right control device 40R, except where otherwise indicated.

The first control device 40L comprises a first support body 21L mounted canti-levered on the handlebar 20, projecting generally forwards from said handlebar in the direction of travel of the bicycle and extending longitudinally from a rear end 65 provided for fixing to the handlebar 20 to a front part 42 generically opposite the rear end 65.

The first support body 21L is fixed, at its rear end 65, to the curved end portion 23 of the handlebar 20 to be able to be gripped by the cyclist in certain racing situations, like for example climbing or sprinting. The fixing of the first support body 21L to the handlebar 20 of the bicycle takes place through conventional connection means (not illustrated), like for example a strap.

The first support body 21L comprises a front wall 67, opposite to the rear end 65 and facing in the direction of travel when the support body 21L is mounted on the handlebar (figure 2), an outer side wall with respect to an intermediate plane P that vertically crosses the support body 21L (the outer side wall is not visible in figures 2 and 3), an inner side wall 64 (figures 2 and 3), arranged on the opposite side to the outer side wall, an upper transversal wall 66 that connects together the outer and inner side walls 64 (figures 2 and 3) and a lower transversal wall 69 opposite to the upper transversal wall 66 (figure 3).

All of the walls are joined so as to form a single body and are typically covered by an outer sheath.

The first support body 21L extends longitudinally along a reference plane 43 (indicated in figure 3), which divides the first support body 21L into an upper part and a lower part.

The first support body 21L has, in its front part 42 that comprises the front wall 67, a protuberance 38 that extends upwards, in a generically transversal direction, preferably perpendicular, with respect to the reference plane 43. Due to the presence of this protuberance 38, the upper transversal wall 66 of the first support body 21L has a substantially saddle-shaped profile, as illustrated in figures 1-3.

The upper transversal wall 66 comprises a first wall portion 66a that extends between the rear end 65 and the protuberance 38, a second wall portion 66b that extends upwards at the protuberance 38 and that faces towards the rear end 65 of the first support body 21L, and a third wall portion 66c that connects the second wall portion 66b to the front wall 67.

Preferably, the second wall portion 66b is sloped with respect to the reference plane 43, the first wall portion 66a is substantially parallel to the reference plane 43, or in any case less sloped with respect to the wall portion 66b and the third wall portion 66c is also less sloped with respect to the wall portion 66b, preferably substantially parallel to the reference plane 43.

Preferably, the first wall portion 66a lies at least partially on the reference plane 43, whereas the aforementioned second wall portion 66b and third wall portion 66c are arranged above the reference plane 43.

Preferably, the second wall portion 66b defines a rear wall 38b, facing towards the rear end 65, of the protuberance 38 and the third wall portion 66c defines an upper wall 38c of the protuberance 38. Such an upper wall 38c connects the rear wall 38b to a front wall 38d of the protuberance 38 opposite the rear wall 38b and that defines at least one portion of the front wall 67 of the first support body 21L.

More preferably, the protuberance 38 of the support body 21L extends from the reference plane 43 upwards in the upper part of the support body 21L.

Even more preferably, the protuberance 38 defines substantially the upper part of the support body 21L.

The second control device 40R comprises a second support body 21R mounted canti-levered on the handlebar 20, projecting generally forwards from said handlebar in the direction of travel and extending longitudinally from a rear end 65' (figure 2) provided for fixing to the bicycle handlebar 20 to a front part generically opposite the rear end (not indicated in the figures). Similarly to the first control device 40L, the fixing of the second support body 21R to the handlebar 20 takes place through conventional connection means.

The second support body 21R preferably has an identical shape to that of the first support body 21L.

Similarly to the first support body 21L, the second support body 21R comprises: a front wall, opposite to the rear end and facing in the direction of travel when the support body 21R is mounted on the handlebar 20, an outer side wall with respect to an intermediate plane P that vertically crosses the support body 21R, an inner side wall, arranged on the opposite side to the outer side wall, an upper transversal wall that connects together the outer and inner side walls, and a lower transversal wall opposite the upper transversal wall. Figure 2 indicates the rear end 65' of the second support body 21R, the outer side wall 64' and the upper transversal wall 66', whereas the other walls are not visible.

Also with reference to the second support body 21R a reference plane (not indicated in the figure) is defined that divides the second support body 21R into an upper part and a lower part.

The second support body 21R has, in its front part, opposite to the rear end 65' and that comprises the front wall, a protuberance 39 that extends upwards, in a direction transversal with respect to the reference plane. The upper transversal wall 66' of the second support body 21R thus also has a substantially saddle-shaped profile, as illustrated in figure 2.

The upper transversal wall 66' comprises: a first wall portion 66a' that extends between the rear end 65' and the protuberance 39, a second wall portion 66b' that extends upwards at the protuberance 39 and that faces towards the rear end 65' of the second support body 21R, and a third wall portion 66c' that connects the second wall portion 66b' to the front wall 67 (not visible in figure 2).

Preferably, the second wall portion 66b' is sloped with respect to the reference plane of the second support body 21R, the first wall portion 66a' is substantially parallel to said reference plane, or in any case less sloped with respect to the second wall portion 66b' and the third wall portion 66c' is also less sloped with respect to the second wall portion 66b', preferably substantially parallel to said reference plane.

Preferably, the first wall portion 66a' lies at least partially on the reference plane of the second support body 21R, whereas the aforementioned second wall portion 66b' and third wall portion 66c' are arranged above the reference plane.

More preferably, the protuberance 39 of the support body 21R extends from the respective reference plane upwards in the upper part of the support body 21R.

Even more preferably, the protuberance 39 substantially defines the upper part of the support body 21R.

Preferably, the second wall portion 66b' of the support body 21R defines a rear wall 39b, facing towards the rear end 65', of the protuberance 39 and the third wall portion 66c' defines an upper wall 39c of the protuberance 39. Such an upper wall 39c connects the rear wall 39b to a front wall 39d of the protuberance 39 opposite the rear wall 39b and that defines at least one portion of the front wall of the support body 21R.

The first control device 40L comprises a first manual control member 22L (left) associated with the lower part of the first support body 21L. The first manual control member 22L is a manual brake control member, in particular a brake lever for controlling the brake of the front or rear wheel.

The second control device 40R comprises a first manual control member 22R (right) associated with the lower part of the second support body 21R. The first manual control member 22R is a manual brake control member, in particular a brake lever for controlling the brake of the front or rear wheel.

By convention, the brake lever 22L controls the brake of the front wheel 6, whereas the brake lever 22R controls the brake of the rear wheel 4. However, an alternative configuration is provided for in which the brake lever 22L controls the brake of the rear wheel 4 and the brake lever 22R controls the brake of the front wheel 6.

The brake levers 22L, 22R of the first and second control device 40L, 40R are supported by the respective support body 21L, 21R so as to be in front of and at the curved portions 23 of the handlebar 20. In particular, each brake lever 22L, 22R is hinged to the respective support body 21L, 21R in a totally conventional manner.

With reference to the first control device 40L illustrated in figure 3 (but an analogous description can be made for the second control device 40R), the brake lever 22L is hinged to a pin 61 parallel to the reference plane 43 for the rotation of the brake lever 22L. The pin 61 is arranged in the lower part of the first support body 21L.

The brake lever 22L is thus associated with the lower part of the support body 21L, and extends downwards with respect to the reference plane 43.

The brake lever 22L, 22R operates a respective first actuator device, in the embodiments described here indicated with braking actuator device.

With reference to figure 1, the brake lever 22L operates a metallic cable 25' that, in the specific example illustrated here, moves a caliper block 26' fixed to the frame 2 to clamp the calipers on the front wheel. Similarly, the brake lever 22R operates a metallic cable 25 that, in the specific example illustrated here, moves a caliper block 26, fixed to the frame 2, to clamp the calipers on the rear wheel. The braking actuator device (left and right), in the present example, is therefore a mechanical actuator device that comprises the metallic cable and the caliper block connected to it. It should be understood that the present invention is not limited to a particular actuator device that operates braking. For example, the braking actuator device can be a hydraulic or pneumatic actuator for actuating disc brakes.

The first and second control device 40L, 40R further comprise respective manual control members 24L, 24R (left and right) for actuating a respective second actuator device 58, 59, indicated as a whole and schematically in figure 4. The manual control members 24L, 24R are respectively associated with the lower part of the support bodies 21L, 21R.

The second actuator device 58 is a gearshifting actuator device that, in the embodiment shown in the figures, comprises a rear derailleur and the manual control members 24L control the actuation of the actuator device 58 of the rear gearshift group 9 (figure 1).

With particular reference to figure 3, the manual control members 24L comprise a gearshift lever 62L for actuating the derailleur in one gearshifting direction and a button 63L for actuating the derailleur in an opposite gearshifting direction to that in which the derailleur is operated by acting on the gearshift lever 62L. The gearshift lever 62L is arranged behind the brake lever 22L and is articulated to the first support body 21L in a totally conventional manner. According to a typical configuration, the gearshift lever 62L is articulated to the first support body 21L so as to be able to be moved in a direction that lies on a plane perpendicular to that of movement of the brake lever 22L, and the button 63L is associated with the first support body 21L at its inner side wall 64. The cyclist who grips the control device 40L operates the button 63L with a thumb and acts on the gearshift lever 62L with other fingers.

Instead of the button 63L a further lever can be provided, like for example the lever 13 illustrated in figures 2-4 of document US 2002/0020246 to the same Applicant.

In alternative embodiments, the actuation of the derailleur in both gearshifting directions can be carried out by acting on a single gearshift lever arranged behind the brake lever 22L (like for example the lever 62L described above).

In further alternative embodiments, the derailleur can be actuated in one or both gearshifting directions by acting on the brake lever 22L (which in this case is articulated to the support body so as to also be able to be moved along a direction perpendicular with respect to the one in which it is moved for braking).

The arrangement of the gearshift lever 62R and of the button 63R in the second support body is analogous to the arrangement of the gearshift levers 62L, 63L in the first support body 21L.

In the case of a mechanical gearshifting actuator device, the manual control members 24L, 24R control a traction control mechanism of the cable, typically comprising a cable-winding bush and an indexer to determine the rotation and the halting of the cable-winding bush in predetermined positions, typically housed inside the support body.

As illustrated in figure 4, in the embodiment illustrated here the manual control members 24L, 24R act on a respective gearshifting actuator device 58, 59 of the electromechanical type.

In this case, in the control device 40L, 40R one or more electrical switches are provided to impart gearshifting request signals to a controller of the actuator. The switches are in turn controlled by one or more manual actuation members, which can be the gearshift levers or buttons 62L, 63L and 62R, 63R. The commands imparted through the manual gearshifting control member are transmitted, for example through electric wires, to an electronic microcontroller 48 that operates the electric gearshifting motor. The electronic microcontroller 48 connected to the one or more switches receives the gearshift control signals and is configured to transform such signals into a gearshifting request signal of the rear derailleur and/or into a gearshifting request signal of the front derailleur. The gearshifting request signals are transmitted to the gearshifting actuator devices 58, 59, connected logically to the electronic microcontroller 48. Each gearshifting actuator device 58, 59 is typically an electromechanical device that comprises an electric motor, coupled with the chain guide member through a linkage. The electronic microcontroller 48 operates the motor so as to take the chain guide element of the derailleur into the desired position.

In accordance with the preferred embodiments of the present invention, the manual control members 24L, 24R are arranged in the lower part of the respective support body 21L, 21R, below the reference plane 43.

The first control device 40L comprises a third manual control member 31L for actuating a third actuator device 30, which in the preferred embodiment of the invention is an electric propulsion actuator device of the bicycle that comprises an electric propulsion motor 27. The third manual control member 31L is housed on the protuberance 38 of the first support body 21L, preferably at the upper part of the latter. Preferably, the third manual control member 31L is arranged on the third wall portion 66c of the upper transversal wall 66 and thus on the upper wall 38c of the protuberance 38.

In a different embodiment, the third manual control member 31L is arranged on the front wall 38d of the protuberance 38.

The third manual control member 31L can comprise one or more levers or buttons adapted for switching the state of switches arranged inside the first support body 21L. Preferably, the third manual control member comprises the first button 31L for adjusting the power delivered by the electric propulsion motor 27 and thus the assistance level.

Preferably, the first control device 40L further comprises a fourth manual control member 33L for actuating the third actuator device 30. In an embodiment, the fourth manual control member 33L is also housed on the protuberance 38 of the first support body 21L, preferably at the upper part of the latter. Preferably, the fourth manual control member 33L is arranged on the third wall portion 66c of the upper transversal wall 66 and thus on the upper wall 38c of the protuberance 38.

In a different embodiment (not illustrated), the fourth manual control member 33L is arranged on the front wall 38d of the protuberance 38 of the first support body 21L.

The fourth manual control member 33L can comprise one or more levers or buttons adapted for switching the state of switches arranged inside the first support body 21L. For example, the fourth control member is a second button 33L.

In the embodiment illustrated in the figure, the first support body 21L comprises a first rocker switch that is configured to be actuated in a first actuation position in which the first switch acts as third control member, and in a second operation position in which it acts as fourth control member, further reducing the occupation of space. In the specific example illustrated here, a button 31L, 33L has an activation surface divided by a middle line 77 into a right half corresponding to the second button 33L, which when presses takes the switch into the first position and a left half corresponding to the first button 31L, which when pressed takes the switch into the second operation position. When none of the two positions is pressed, the button 31L, 33L is in a rest position in which no command is imparted to the third actuator device.

Preferably, one of the two actuation positions corresponds to a command to increase the power delivered by the electric propulsion motor 27 and the other of the two positions corresponds to a command to decrease the power delivered.

In an alternative embodiment, the fourth manual control member 33L, both when comprised in a rocker switch and when present as independent button or lever from the button 31L, is configured to operate a fourth actuator device different from the electric propulsion actuator device, like for example a saddle configuration adjuster, a configuration adjuster of a damper and a direction indicator.

As already stated, in the embodiment illustrated here, the third actuator device 30 is an electric propulsion actuator device of the bicycle.

As is in general known, in pedal assisted bicycles, the electric motor only turns on when the cyclist pedals and usually turns off once a limit speed, set by the highway code, for example 25 km/h, is reached. The electric motor can be installed in various positions on the bicycle: on the rear or front hub or in a central position on the frame at the level of the pedals so as to act directly on the transmission system.

Figure 4 is a block diagram of the electric and electronic part of an electronic device that comprises the control device 40L, 40R, in accordance with an embodiment of the present invention.

As illustrated in figure 1, the electric propulsion actuator device 30 is fixed to the frame 2, at the height of the pedals 7, of the bicycle 1. Some parts that make up the actuator device 30 are not visible in figure 1 since they are enclosed in a protective casing.

With reference to figure 4, the propulsion actuator device 30 comprises an electric propulsion motor 27, typically a brushless DC electric motor, and an electronic motor controller 50 operatively connected to the electronic motor 27. When the electronic motor 27 is in action, the power required to move the bicycle is provided to the rear driving wheel 4 through the chain 13 both by the user (through the pedals 7) and by the electronic motor 27.

Preferably and with reference to figures 1 and 4, the actuator device 30 comprises a reduction gear 28 connected coaxially to the electronic motor 27 to stabilize and increase the efficiency of the coupling of the electronic motor 27 with the pedals 7.

The actuator device 30, and in particular the electronic motor controller 50, is connected to a battery 29 for supplying energy, for example through an electric cable 71. In the example of figure 1, the battery 29 is arranged on the down tube of the frame 2, inside a suitable case (only the case is visible in figure 1). However, the battery can be installed on other parts of the frame 2 or more generally of the bicycle 1, for example on the seat post 18 or on a rear luggage rack (not shown).

The actuator device 30 further comprises a torque sensor 52 for detecting the torque exerted by the user on the pedals 7. The torque sensor 52 is connected to the electronic motor controller 50, the electronic controller 50 being configured to receive sensor signals from the torque sensor 52, generate control signals based on the sensor signals received, the control signals then being transmitted to the electric motor 27 that is thus actuated with a percentage torque selected as a function of the control signals received. For example, the torque sensor 52 is an electric extensimeter or a load cell.

The actuator device 30 further comprises a speed sensor 17, installed for example on the rear wheel 4, which allows control of the travel speed and possibly, as provided for by some regulations, the turning off of the electric motor 27 once the maximum allowed speed for pedal assisted bicycles has been exceeded, for example 25 km/h. For this purpose, the speed sensor 17 is connected to the electronic motor controller 50 and is configured to transmit to the electronic motor controller 50 sensor signals corresponding to the detected speeds.

The third manual control member 31L is connected, for example through an electric cable 37, to a first electronic control unit 35 housed in an inner part of the first support body 21L. The third manual control member 31L is configured to generate control signals once operated. The control signals are acquired by the first control unit 35 that is configured to process said control signals and generate control signals.

The first control unit 35 is connected, for example through an electric cable 44', to the third actuator device 30, and in particular to the electronic motor controller 50, so as to be able to control the power delivered by the electric motor 27 as a function of the control signals acquired. In particular, the electronic motor controller 50 is configured to adjust the electric power generated by the electric motor 27 to a power value selected based on a control signal generated through the actuation of the third manual control member 31L. The adjustment of the electric power of the electric motor 27 actuated by the electronic motor controller 50 comprises turning on the electric motor 27 at a certain power value and possibly turning off the motor itself (zero power value).

In the present description and in the following claims the term "connect" or "connection" between electrical and electronic elements and/or devices is meant to indicate both a physical connection, for example through an electric cable, and a wireless connection (Wi-Fi, Bluetooth and broadband mobile connections).

In some preferred embodiments, the control signals generated following the actuation of the third manual control member 31L are representative of a plurality of states of actuation of the actuator device 30 and in particular of the electric motor 27.

Preferably, the plurality of states of actuation correspond to a respective plurality of power levels representative of respective levels of pedal assistance.

Preferably, the first control device 40L comprises a first visual indicator 32L mounted on the upper transversal wall 66 of the first support body 21L, preferably on the protuberance 38 at the upper part of the support body 21L. Preferably, the first visual indicator 32L is arranged on the third wall portion 66c of the upper transversal wall 66 (thus on the wall 38c of the protuberance 38) or on the second wall portion 66b of the upper transversal wall 66 of the support body 21L, thus on the rear wall 38b of the protuberance 38.

In the embodiment illustrated here, the first visual indicator 32L is arranged, preferably close to the first button 31L, on the third portion 66c of upper transversal wall 66 of the support body 21L, thus on the upper wall 38c of the protuberance 38.

The first visual indicator 32L is connected to the first control unit 35, for example through an electric cable 37". When the first control unit 35 acquires a control signal from the first button 31L (or 31L, 33L in the case of a rocker switch) following the actuation of the first button 31L, the first control unit 35 processes the control signal acquired and transmits to the first visual indicator 32L a signal to display information in response to the control signal received.

Alternatively, the first control unit 35 is configured to process the control signal acquired and transmit to the first visual indicator 32L a signal for displaying information in response to a signal received by the electronic motor controller 50 after the electronic motor controller 50 has received the control signal coming from the control unit 35 and a feedback signal coming from the electric motor 27.

Preferably, the first visual indicator 32L is a light indicator, for example an LED light indicator. In the preferred embodiments, the first visual indicator is a display that comprises a screen, for example an LCD or LED screen. In the embodiment shown in the figures, the display 32L is a segment display the screen of which is made up of a plurality of luminous spots, wherein the number of lit spots indicates the assistance level selected by the user or in current use, the assistance level constituting the information displayed by the display. The screen of the display 32L is in the form of an angular sector and at least partially surrounds the first manual button 31L, which is preferably circular in shape.

In some preferred embodiments, the second control device 40R comprises the fourth manual control member configured to actuate the third actuator device 30. Preferably, the fourth manual control member comprises a third button 31R arranged on the second support body 21R. In such embodiments, the actuation of the fourth control for the actuation of the third actuator device is not provided for in the first control device 40L. The third button 31R is housed on the protuberance 39 of the second support body 21R, preferably at the upper part of the latter. Preferably, the fourth manual control member 31R is arranged on the third wall portion 66'c of the upper transversal wall 66' and thus on the upper wall 39c of the protuberance 39.

In a different embodiment, the third button 31R is arranged on the front wall 39d of the protuberance 39.

In an alternative embodiment, the fourth manual control member 33R is configured for the actuation of a different actuator device from the electric propulsion actuator device 30, like for example a saddle configuration adjuster, a configuration adjuster of a damper and a direction indicator.

In some embodiments, the second support body comprises a fourth button 33R, arranged on the upper wall 39c or front wall 39d of the protuberance 39. The third and fourth button 31R, 33R can be configured to actuate the third or a fourth actuator device or, respectively, the third and the fourth actuator device. For example, the third button 31R actuates the third actuator device 30 and the fourth button 33R actuates the fourth actuator device (or vice-versa).

The fourth manual control member 33R can comprise one or more levers or buttons adapted for switching the state of switches arranged inside the second support body 21R. In the specific example illustrated here, the fourth manual control member 33R is a button.

In the embodiment illustrated in figure 2, the second support body 21R comprises a second rocker switch that is configured to be actuated in a first actuation position and in a second actuation position. In the specific example illustrated here, the button has an activation surface divided by a middle line into a right half (third button 31R) and a left half (fourth button 33R), which when pressed takes the switch into the second operation position. The second switch 31R, 33R can be the same as the first switch 31L, 33L.

Considering the symmetry between the first support body 21L and the second support body 21R, the second rocker switch can actuate the third actuator device 30 in the two directions of increased and reduced power, whereas the first rocker switch 31L, 33L can operate a fourth actuator device, for example the height of a seat post, in the two directions.

Furthermore, it is foreseen for the first actuation position of the first switch to actuate the third actuator device and the second actuation position to actuate a fourth actuator device in a respective direction, whereas the first actuation position of the second switch actuate the third actuator device and the second actuation position of the second switch actuate the fourth actuator device in a respective different direction from those operated by the first switch.

The second button 31R is connected, for example through an electric cable 37, to a second electronic control unit 36 housed in an inner part of the second support body 21R. The second button 31R is configured to generate control signals, once actuated. The control signals are acquired by the second control unit 36 that is configured to process said control signals and generate control signals.

The second control unit 36 is connected, for example through an electric cable 44 that extends along the rod 20a of the handlebar 20 (figure 2), to the first control unit 35. The control signals generated by the second control unit 36 in response to receiving the control signals generated by the second button 31R are transmitted to the first control unit 35 to be transmitted to the electric motor controller 50.

In the embodiments that provide for a first visual indicator 32L mounted on the first support body 21L, preferably the first control unit 35 is configured to acquire an electric control signal transmitted by the second control unit 36, process the control signal acquired to transmit to the first visual indicator 32L a signal for displaying information in response to the electric control signal generated by the second button 31R, the information preferably being indicative of a power level of the third actuator device 30.

In such an embodiment, the first button 31L and the second button 31R are configured to adjust the power delivered by the actuator device 30 transmitting, through the control unit 35, control signals representative of control signals to the electric motor controller 50. Preferably, the first button 31L is configured to increase/reduce the power delivered by the electric motor 27 whereas the second button 31R is configured to reduce/increase said power.

Preferably, the second manual control device 40R comprises a second visual indicator 32R mounted on the upper transversal wall of the second support body 21R, preferably on the protuberance 39 at the upper part of the support body 21R. Preferably, the second visual indicator 32R is arranged on the third wall portion 66'c of the upper transversal wall 66' (thus on the wall 39c of the protuberance 39) or on the second wall portion 66'b (thus on the rear wall 39b of the protuberance 39). Preferably, the second visual indicator 32R is arranged close to the second button 31R. Preferably, the second visual indicator 32R is a display that comprises a screen.

The second visual indicator 32R is connected to the second control unit 35, for example through an electric cable 37'.

The second visual indicator 32R preferably has identical shape and arrangement to those of the first visual indicator 32L. In particular, the screen of the display 32R has the shape of an angular sector and at least partially surrounds the second button 31R, which preferably has a circular shape.

Each of the first and second control device 40L, 40R can comprise a respective bulb 32a and 34a, for example an LED bulb, connected to the respective control unit 35, 36 through an electric cable 37', for the backlight of the respective display 32L and 32R.

The first or second control device 40L, 40R can foresee, mounted on the respective support body 21L, 21R, a fifth manual control member, for example a button 75, for controlling a cycle-computer 80, which is schematically illustrated in figure 2 and that for example can be mounted in the central portion of the rod 20a of the handlebar 20.

Preferably, the button 75 is arranged in the lower part of the support body 21L, 21R, under the respective reference plane, as illustrated in figure 3.

The actuation of the button 75 generates a signal that can initiate and/or scroll one or more screenshots of data display on a display device 81 of the cycle-computer 80 or can activate the data transmission to the cycle-computer for possible subsequent display of the data. The signal generated following the actuation of the button 75 can be transmitted to the cycle-computer 80 directly by a control unit 35 or 36 or by the electronic microcontroller 48.

In the specific example illustrated here, the button 75 is connected through an electric cable 75a to the respective control unit 35, 36. The signal generated following the operation of the button 75 is transmitted, through the control unit 35 to the electronic microcontroller 48, which in turn transmits a signal to the cycle-computer 80, preferably wirelessly through an antenna board 60 connected to the microcontroller 48 (figure 4).

With reference in particular to figure 4, the electronic controller 50 of the electric motor 27 is part of a central electronic control device 51 for controlling the second and third actuator device 58, 59, 30, as well as for controlling the control device 40L, 40R and the cycle-computer 80. The central control device 51 comprises the electronic microcontroller 48 and the aforementioned antenna board 60.

The electronic microcontroller 48 is connected through electric cables 72 to the control device 40L, to the rear gearshifting actuator device 58 and to the front gearshifting actuator device 59 through respective inputs of the electronic microcontroller 48.

The electronic microcontroller 48 comprises at least one signal output connected to the motor controller 50. The electronic microcontroller 48 is configured to acquire in input control signals from the control device 40L through the first control unit 35. In particular, the electronic microcontroller 48 is configured to acquire control signals associated with control signals generated by the manual control members 31L, 31R and/or 31L, 33L and to transmit such signals to the motor controller 50 for the operation of the electric motor 27.

The electronic microcontroller 48 is also configured to acquire electric control signals from the manual control members 24L, 24R. The electrical connections between the gearshifting levers or buttons and the central control device 51, of the *per se* known type, are not shown in the figures. Upon receiving electric control signals from the manual control members 24L, 24R, the microcontroller 48 processes such control signals and sends gearshifting control signals to the rear or front gearshifting actuator device 58, 59 for the movement of the respective derailleur.

The battery 29 is connected to the electronic microcontroller 48. It is preferable for the electric connection between the battery 29 and the electronic microcontroller 48 to take place through a DC/DC electrical converter 47 configured to lower the voltage generated by the battery to a value tolerated by the electronic microcontroller 48. For example, the converter 47 can be configured to convert the 36V voltage output from the battery to a 3.3V value. The electrical converter 47 is connected in input to the battery 29 and in output with the electronic microcontroller 48 and is part of the central control device 51.

The motor controller 50 is connected to the battery 29 through the electric cable 71 to power the electric propulsion motor 27 and the sensors 17, 52.

The central control device 51 further comprises a linear voltage regulator 46 for the energy management of the battery and the control of the powering of the electronic microcontroller 48 and of the electronic controller 50. The linear voltage regulator 46 can be connected to a battery charger unit 56 external to the electric bicycle, the battery charger unit 56 being able to be connected to an external power supply network to charge the battery 29. The linear voltage regulator 46 is connected to a switch 55 for turning the on-board electronics of the central control device 51 off and on.

The components of the central control device 51 can be integrated on a single board arranged in an accessible position of the bicycle, for example mounted on the frame close to the pedal cranks 7, or on the down tube of the frame, close to the battery 29, or on the seat post 18, or inside the handlebar 22 at one of the handgrips 23, or associated with the handlebar rod 20a, outside of the handlebar 20.

The central control device 51, which comprises one or more electronic boards that contain the electronic components 46, 47, 48, 50, 60, can be physically integrated on the motor, or separate from it and arranged in a different position. Preferably, the central control device 51 is mounted directly on the motor 27.

Although the detailed description of the preferred embodiments refers to an electric propulsion actuator device for an electric bicycle or a pedal assisted bicycle, the third actuator device can be selected among the group consisting of: an electric propulsion actuator, a saddle configuration adjuster, a configuration adjuster of a damper and a direction indicator.

For example, in the case in which the third or fourth actuator device is an adjuster of a saddle configuration, the cyclist can activate a seat post height adjustment mechanism through the third and/or fourth manual control member that actuates a motor for moving the seat post to take the saddle to the selected height, possibly adjusting the configuration of the saddle in one direction with a control member and in the opposite direction with another control member. Similarly, in the case in which the third or fourth actuator device is a configuration adjuster of a damper to stiffen/soften a damper, the cyclist can activate the adjustment mechanism through the third and/or fourth actuator device. In the case in which the third or fourth actuator device comprises a direction indicator, it is for example possible to control the actuator by turning a left indicator on and off with the third control member on the left support body, and by turning a right indicator on and off with the fourth control member on the right support body.

Those skilled in the art will recognize that it is possible to combine the various features of the embodiments described above in order to obtain further embodiments, all of which are in any case encompassed by the present invention as defined by the following claims.

## Claims

1. Control device (40L, 40R) for a bicycle, comprising:
- a support body (21L, 21R) having a substantially horizontal reference plane (43) extending from a rear end (65) configured for fixing to a bicycle handlebar (20) to a front part (42) opposite to the rear end (65, 65'), the reference plane (43) dividing the support body (21L, 21R) into an upper part and a lower part, where the front part (42) comprises a protuberance (38, 39) that extends upwards with respect to the reference plane (43),
- a first manual control member (22L, 22R) of a first actuator device (25, 26, 25', 26'), the first manual control member (22L, 22R) being associated with the lower part of the support body (21L, 21R), and
- a second manual control member (24L, 24R) of a second actuator device (58, 59), the second manual control member (24L, 24R) being associated with the lower part of the support body (21L, 21R), and
- at least one third manual control member (31L, 31R) in an operational connection with at least one third actuator device (30) for actuating said at least one third actuator device (30), wherein said at least one third manual control member (31L, 31R) is associated with the upper part of the support body (21L, 21R) and arranged on the protuberance (38, 39),
**characterized in that** it comprises a fourth manual control member (33L, 33R) in an operational connection with said at least one third actuator device (30) or with a fourth actuator device, for actuating said at least one third or fourth actuator device, wherein said fourth manual control member (33R, 33L) is associated with the upper part of the support body (21L, 21R) and arranged on the protuberance (38, 39).

2. Device according to claim 1, **characterized in that** it comprises a control unit (35, 36) housed in an inner part of the support body (21L, 21R), said control unit (35, 36) being configured to acquire control signals generated by the actuation of at least said at least one third manual control member (31L, 31R).

3. Device according to claim 2, **characterized in that** it further comprises a visual indicator (32L, 32R) housed in the upper part of the support body (21L, 21R) and arranged on the protuberance (38,39) close to said at least one third manual control member (31L, 31R).

4. Device according to claim 3, **characterized in that**:
said visual indicator (32L, 32R) is connected to said control unit (35, 36), and
said control unit (35, 36) is configured to process at least one of the acquired control signals and to transmit to said visual indicator (32L, 32R) a signal for displaying at least information linked to a state of actuation of said at least one third actuator device (30).

5. Device according to one or more of the preceding claims, **characterized in that** said protuberance (38, 39) comprises an upper wall (38c, 39c), a rear wall (38b, 39b) facing towards the rear end (65, 65') of the support body (21L, 21R), a front wall (38d, 39d) opposite the rear wall (38b, 39b), said at least one third manual control member (31L, 31R) being arranged on the upper wall (38c, 39c) or on the front wall (38d, 39d) of the protuberance (38,39).

6. Device according to one or more of the preceding claims, **characterized in that** it comprises a fifth manual control member (75) of a further display device or of a data transmitting/receiving device, said fifth manual control member (75) being associated with the lower part of the support body (21L, 21R).

7. Electric device for a bicycle comprising:
- a control device for a bicycle in accordance with any one of claims 1 to 6,
- a first actuator device (25, 25', 26, 26') connected to the first manual control member (22L, 22R),
- a second actuator device (58, 59) connected to the second manual control member (24L, 24R),
- at least one third actuator device (30) connected to said at least one third manual control member (31L, 31R).

8. Electric device for a bicycle according to claim 7, **characterized in that** said at least one third manual control member (31L, 31R) is connected to said at least one third actuator device (30) and is configured to select one among a plurality of states of actuation of said at least one third actuator device (30).

9. Electric device for a bicycle according to claim 7, **characterized in that**:
- said at least one third and one fourth manual control member (31L, 31R, 33L, 33R) are connected to said at least one third actuator device (30),
- the third manual control member (31L, 31R) is configured to select a progression of states of actuation of said at least one third actuator device (30) and the fourth manual control member (33L, 33R) is configured to select an inverse progression of states of actuation of said at least one third actuator device (30).

10. Electric device for a bicycle according to claim 7, **characterized in that** it comprises:
- a fourth actuator device connected to the fourth manual control member (33L, 33R).

11. Electric device for a bicycle according to claim 7 or claim 10, **characterized in that** said at least one third actuator device (30) and/or said fourth actuator device is selected among the group consisting of: an electric propulsion actuator, a saddle configuration adjuster, a configuration adjuster of a damper and a direction indicator.

12. Electric device for a bicycle according to claim 11, **characterized in that** it comprises:
- a first control device for a bicycle (40L) in accordance with any one of claims 1 to 6 adapted for being fixed at a left end of a handlebar (20) of said bicycle;
- a second control device for a bicycle (40R) in accordance with any one of claims 1 to 6 adapted for being fixed at a right end of a handlebar (20) of said bicycle.

13. Electric device for a bicycle according to claim 12, **characterized in that**:
- the third manual control member (31L) of the control device adapted for being fixed at said left/right end is configured to select a progression of states of actuation of said at least one third actuator device (30);
- the third manual control member (31R) of the control device adapted for being fixed at the other right/left end is configured to select an inverse progression of states of actuation of said at least one third actuator device (30).

14. Electric device for a bicycle according to claim 8, **characterized in that** said at least one third actuator device (30) is an electric propulsion actuator and said plurality of states of actuation comprises a plurality of power levels delivered by said electric propulsion actuator.

## Patentansprüche

1. Steuerungsvorrichtung (40L, 40R) für ein Fahrrad, umfassend:
- einen Trägerkörper (21L, 21R) mit einer im Wesentlichen horizontalen Referenzebene (43), die sich von einem hinteren Ende (65), das zum Befestigen an einem Fahrradlenker (20) konfiguriert ist, zu einem dem hinteren Ende (65, 65') gegenüberliegenden vorderen Teil (42) erstreckt, wobei die Referenzebene (43) den Trägerkörper (21L, 21R) in einen oberen Teil und einen unteren Teil teilt, wobei der vordere Teil (42) einen Vorsprung (38, 39) aufweist, der sich mit Bezug auf die Referenzebene (43) nach oben erstreckt,
- ein erstes manuelles Steuerungselement (22L, 22R) einer ersten Betätigungsvorrichtung (25, 26, 25', 26'), wobei das erste manuelle Steuerungselement (22L, 22R) dem unteren Teil des Trägerkörpers (21L, 21R) zugeordnet ist, und
- ein zweites manuelles Steuerungselement (24L, 24R) einer zweiten Betätigungsvorrichtung (58, 59), wobei das zweite manuelle Steuerungselement (24L, 24R) dem unteren Teil des Trägerkörpers (21L, 21R) zugeordnet ist, und
wenigstens ein drittes manuelles Steuerungselement (31L, 31R) in einer Wirkverbindung mit wenigstens einer dritten Betätigungsvorrichtung (30) zum Betätigen der wenigstens einen dritten Betätigungsvorrichtung (30), wobei das wenigstens eine dritte manuelle Steuerungselement (31L, 31R) dem oberen Teil des Trägerkörpers (21L, 21R) zugeordnet und auf dem Vorsprung (38, 39) angeordnet ist,
**dadurch gekennzeichnet, dass** es ein viertes manuelles Steuerungselement (33L, 33R) in einer Wirkverbindung mit der wenigstens einen dritten Betätigungsvorrichtung (30) oder mit einer vierten Betätigungsvorrichtung zum Betätigen der wenigstens einen dritten oder vierten Betätigungsvorrichtung umfasst, wobei das vierte manuelle Steuerungselement (33R, 33L) dem oberen Teil des Trägerkörpers (21L, 21R) zugeordnet und auf dem Vorsprung (38, 39) angeordnet ist.

2. Vorrichtung nach Anspruch 1, **dadurch gekennzeichnet, dass** sie eine Steuerungseinheit (35, 36) umfasst, die in einem inneren Teil des Trägerkörpers (21L, 21R) untergebracht ist, wobei die Steuerungseinheit (35, 36) konfiguriert ist, um Steuerungssignale zu erfassen, die durch die Betätigung von wenigstens dem wenigstens einen dritten manuellen Steuerungselement (31L, 31R) erzeugt werden.

3. Vorrichtung nach Anspruch 2, **dadurch gekennzeichnet, dass** sie des Weiteren eine visuelle Anzeige (32L, 32R) umfasst, die im oberen Teil des Trägerkörpers (21L, 21R) untergebracht und auf dem Vorsprung (38, 39) in der Nähe des wenigstens einen dritten manuellen Steuerungselements (31L, 31R) angeordnet ist.

4. Vorrichtung nach Anspruch 3, **dadurch gekennzeichnet, dass:**
die visuelle Anzeige (32L, 32R) mit der Steuerungseinheit (35, 36) verbunden ist und
die Steuerungseinheit (35, 36) konfiguriert ist, um wenigstens eines der erfassten Steuerungssignale zu verarbeiten und ein Signal zum Anzeigen von wenigstens mit einem Betätigungszustand der wenigstens einen dritten Betätigungsvorrichtung (30) verknüpfte Informationen zur visuellen Anzeige (32L, 32R) zu senden.

5. Vorrichtung nach einem oder mehreren der vorhergehenden Ansprüche, **dadurch gekennzeichnet, dass** der Vorsprung (38, 39) eine obere Wand (38C, 39C), eine dem hinteren Ende (65, 65') des Trägerkörpers (21L, 21R) zugewandte Rückwand (38b, 39b), eine vordere Wand (38d, 39d) gegenüber der Rückwand (38b, 39b) umfasst, wobei das wenigstens eine dritte manuelle Steuerungselement (31L, 31R) an der oberen Wand (38C, 39C) oder an der vorderen Wand (38d, 39d) des Vorsprungs (38, 39) angeordnet ist.

6. Vorrichtung nach einem oder mehreren der vorhergehenden Ansprüche, **dadurch gekennzeichnet, dass** sie ein fünftes manuelles Steuerungselement (75) einer weiteren Anzeigevorrichtung oder einer Datenübertragungs-/Empfangsvorrichtung umfasst, wobei das fünfte manuelle Steuerungselement (75) dem unteren Teil des Trägerkörpers (21L, 21R) zugeordnet ist.

7. Elektrische Vorrichtung für ein Fahrrad umfassend:
- eine Steuerungsvorrichtung für ein Fahrrad nach einem der Ansprüche 1 bis 6,
- eine mit dem ersten manuellen Steuerungselement (22L, 22R) verbundene erste Betätigungsvorrichtung (25, 25', 26, 26'),
- eine mit dem zweiten manuellen Steuerungselement (24L, 24R) verbundene zweite Betätigungsvorrichtung (58, 59),
- wenigstens eine mit dem wenigstens einen dritten manuellen Steuerungselement (31L, 31R) verbundene dritte Betätigungsvorrichtung (30).

8. Elektrische Vorrichtung für ein Fahrrad nach Anspruch 7, **dadurch gekennzeichnet, dass** das wenigstens eine dritte manuelle Steuerungselement (31L, 31R) mit der wenigstens einen dritten Betätigungsvorrichtung (30) verbunden und konfiguriert ist, um einen aus einer Vielzahl von Betätigungszuständen der wenigstens einen dritten Betätigungsvorrichtung (30) auszuwählen.

9. Elektrische Vorrichtung für ein Fahrrad nach Anspruch 7, **dadurch gekennzeichnet, dass:**
- das wenigstens eine dritte und eine vierte manuelle Steuerungselement (31L, 31R, 33L, 33R) mit der wenigstens einen dritten Betätigungsvorrichtung (30) verbunden sind,
- das dritte manuelle Steuerungselement (31L, 31R) konfiguriert ist, um einen Verlauf von Betätigungszuständen der wenigstens einen dritten Betätigungsvorrichtung (30) auszuwählen, und das vierte manuelle Steuerungselement (33L, 33R) konfiguriert ist, um einen umgekehrten Verlauf von Betätigungszuständen der wenigstens einen dritten Betätigungsvorrichtung (30) auszuwählen.

10. Elektrische Vorrichtung für ein Fahrrad nach Anspruch 7, **dadurch gekennzeichnet, dass** sie umfasst:
- eine vierte Betätigungsvorrichtung, die mit dem vierten manuellen Steuerungselement (33L, 33R) verbunden ist.

11. Elektrische Vorrichtung für ein Fahrrad nach Anspruch 7 oder Anspruch 10, **dadurch gekennzeichnet, dass** die wenigstens eine dritte Betätigungsvorrichtung (30) und/oder die vierte Betätigungsvorrichtung aus der Gruppe ausgewählt werden, die besteht aus: einem elektrischen Antriebsbetätigungselement, einem Sattelkonfigurationseinsteller, einem Konfigurationseinsteller eines Dämpfers und einem Richtungsanzeiger.

12. Elektrische Vorrichtung für ein Fahrrad nach Anspruch 11, **dadurch gekennzeichnet, dass** sie umfasst:
- eine erste Steuerungsvorrichtung für ein Fahrrad (40L) nach einem der Ansprüche 1 bis 6, die angepasst ist, um an einem linken Ende eines Lenkers (20) des Fahrrads befestigt zu werden;
- eine zweite Steuerungsvorrichtung für ein Fahrrad (40R) nach einem der Ansprüche 1 bis 6, die angepasst ist, um an einem rechten Ende eines Lenkers (20) des Fahrrads befestigt zu werden.

13. Elektrische Vorrichtung für ein Fahrrad nach Anspruch 12,
**dadurch gekennzeichnet, dass:**
- das dritte manuelle Steuerungselement (31L) der Steuerungsvorrichtung, das angepasst ist, um an dem linken/rechten Ende befestigt zu werden, konfiguriert ist, um einen Verlauf von Betätigungszuständen der wenigstens einen dritten Betätigungsvorrichtung (30) auszuwählen;
- das dritte manuelle Steuerungselement (31R) der Steuerungsvorrichtung, das angepasst ist, um an dem anderen linken/rechten Ende befestigt zu werden, konfiguriert ist, um einen umgekehrten Verlauf von Betätigungszuständen der wenigstens einen dritten Betätigungsvorrichtung (30) auszuwählen;

14. Elektrische Vorrichtung für ein Fahrrad nach Anspruch 8, **dadurch gekennzeichnet, dass** die wenigstens eine dritte Betätigungsvorrichtung (30) ein elektrisches Antriebsbetätigungselement ist und die Vielzahl von Betätigungszuständen eine Vielzahl von Leistungspegeln umfasst, die von dem elektrischen Antriebsbetätigungselement geliefert werden.

## Revendications

1. Dispositif de commande (40L, 40R) pour une bicyclette, comprenant :
- un corps de support (21L, 21R) qui comporte un plan de référence sensiblement horizontal (43) qui est étendu depuis une extrémité arrière (65) qui est configurée pour être fixée à un guidon de bicyclette (20) jusqu'à une partie avant (42) qui est opposée à l'extrémité arrière (65, 65'), le plan de référence (43) divisant le corps de support (21L, 21R) selon une partie supérieure et une partie inférieure, dans lequel la partie avant (42) comprend une protubérance (38, 39) qui est étendue vers le haut par rapport au plan de référence (43) ;
- un premier élément de commande manuelle (22L, 22R) d'un premier dispositif d'actionneur (25, 26, 25', 26'), le premier élément de commande manuelle (22L, 22R) étant associé à la partie inférieure du corps de support (21L, 21R) ; et
- un deuxième élément de commande manuelle (24L, 24R) d'un deuxième dispositif d'actionneur (58, 59), le deuxième élément de commande manuelle (24L, 24R) étant associé à la partie inférieure du corps de support (21L, 21R) ; et
- au moins un troisième élément de commande manuelle (31L, 31R) qui est selon une connexion opérationnelle avec au moins un troisième dispositif d'actionneur (30) pour actionner ledit au moins un troisième dispositif d'actionneur (30), dans lequel ledit au moins un troisième élément de commande manuelle (31L, 31R) est associé à la partie supérieure du corps de support (21L, 21R) et est agencé sur la protubérance (38, 39) ;
**caractérisé en ce qu'**il comprend un quatrième élément de commande manuelle (33L, 33R) qui est selon une connexion opérationnelle avec ledit au moins un troisième dispositif d'actionneur (30) ou avec un quatrième dispositif d'actionneur, pour actionner ledit au moins un troisième dispositif d'actionneur ou ledit quatrième dispositif d'actionneur ;
dans lequel ledit quatrième élément de commande manuelle (33R, 33L) est associé à la partie supérieure du corps de support (21L, 21R) et est agencé sur la protubérance (38, 39).

2. Dispositif selon la revendication 1, **caractérisé en ce qu'**il comprend une unité de commande (35, 36) qui est logée dans une partie interne du corps de support (21L, 21R), ladite unité de commande (35, 36) étant configurée pour acquérir des signaux de commande qui sont générés par l'actionnement d'au moins ledit au moins un troisième élément de commande manuelle (31L, 31R).

3. Dispositif selon la revendication 2, **caractérisé en ce qu'**il comprend en outre un indicateur visuel (32L, 32R) qui est logé dans la partie supérieure du corps de support (21L, 21R) et qui est agencé sur la protubérance (38, 39) à proximité dudit au moins un troisième élément de commande manuelle (31L, 31R).

4. Dispositif selon la revendication 3, **caractérisé en ce que** :
ledit indicateur visuel (32L, 32R) est connecté à ladite unité de commande (35, 36) ; et
ladite unité de commande (35, 36) est configurée pour traiter au moins l'un des signaux de commande acquis et pour transmettre audit indicateur visuel (32L, 32R) un signal pour afficher au moins une information qui est liée à un état d'actionnement dudit au moins un troisième dispositif d'actionneur (30).

5. Dispositif selon une ou plusieurs des revendications précédentes, **caractérisé en ce que** ladite protubérance (38, 39) comprend une paroi supérieure (38c, 39c), une paroi arrière (38b, 39b) qui est orientée en direction de l'extrémité arrière (65, 65') du corps de support (21L, 21R) de manière à lui faire face, une paroi avant (38d, 39d) qui est opposée à la paroi arrière (38b, 39b), ledit au moins un troisième élément de commande manuelle (31L, 31R) étant agencé sur la paroi supérieure (38c, 39c) ou sur la paroi avant (38d, 39d) de la protubérance (38, 39).

6. Dispositif selon une ou plusieurs des revendications précédentes, **caractérisé en ce qu'**il comprend un cinquième élément de commande manuelle (75) d'un autre dispositif d'affichage ou d'un dispositif d'émission/de réception de données, ledit cinquième élément de commande manuelle (75) étant associé à la partie inférieure du corps de support (21L, 21R).

7. Dispositif électrique pour une bicyclette comprenant :
- un dispositif de commande pour une bicyclette selon l'une quelconque des revendications 1 à 6 ;
- un premier dispositif d'actionneur (25, 25', 26, 26') qui est connecté au premier élément de commande manuelle (22L, 22R) ;
- un deuxième dispositif d'actionneur (58, 59) qui est connecté au deuxième élément de commande manuelle (24L, 24R) ; et
- au moins un troisième dispositif d'actionneur (30) qui est connecté audit au moins un troisième élément de commande manuelle (31L, 31R).

8. Dispositif électrique pour une bicyclette selon la revendication 7, **caractérisé en ce que** ledit au moins un troisième élément de commande manuelle (31L, 31R) est connecté audit au moins un troisième dispositif d'actionneur (30) et est configuré pour sélectionner un état parmi une pluralité d'états dudit au moins un troisième dispositif d'actionneur (30).

9. Dispositif électrique pour une bicyclette selon la revendication 7, **caractérisé en ce que** :
- ledit au moins un troisième élément de commande manuelle et ledit quatrième élément de commande manuelle (31L, 31R, 33L, 33R) sont connectés audit au moins un troisième dispositif d'actionneur (30) ; et
- le troisième élément de commande manuelle (31L, 31R) est configuré pour sélectionner une progression d'états d'actionnement dudit au moins un troisième dispositif d'actionneur (30) et le quatrième élément de commande manuelle (33L, 33R) est configuré pour sélectionner une progression inverse d'états d'actionnement dudit au moins un troisième dispositif d'actionneur (30).

10. Dispositif électrique pour une bicyclette selon la revendication 7, **caractérisé en ce qu'**il comprend :
- un quatrième dispositif d'actionneur qui est connecté au quatrième élément de commande manuelle (33L, 33R).

11. Dispositif électrique pour une bicyclette selon la revendication 7 ou la revendication 10, **caractérisé en ce que** ledit au moins un troisième dispositif d'actionneur (30) et/ou ledit quatrième dispositif d'actionneur sont/est sélectionné(s) parmi le groupe qui est constitué par : un actionneur de propulsion électrique, un moyen de réglage de configuration de selle, un moyen de réglage permettant de régler la configuration d'un amortisseur et un indicateur de direction.

12. Dispositif électrique pour une bicyclette selon la revendication 11, **caractérisé en ce qu'**il comprend :
- un premier dispositif de commande pour une bicyclette (40L) selon l'une quelconque des revendications 1 à 6 qui est adapté pour être fixé au niveau d'une extrémité gauche d'un guidon (20) de ladite bicyclette ; et
- un second dispositif de commande pour une bicyclette (40R) selon l'une quelconque des revendications 1 à 6 qui est adapté pour être fixé au niveau d'une extrémité droite d'un guidon (20) de ladite bicyclette.

13. Dispositif électrique pour une bicyclette selon la revendication 12, **caractérisé en ce que** :
- le troisième élément de commande manuelle (31L) du dispositif de commande qui est adapté pour être fixé au niveau de ladite extrémité gauche/droite est configuré pour sélectionner une progression d'états d'actionnement dudit au moins un troisième dispositif d'actionneur (30) ; et
- le troisième élément de commande manuelle (31R) du dispositif de commande qui est adapté pour être fixé au niveau de l'autre extrémité droite/gauche est configuré pour sélectionner une progression inverse d'états d'actionnement dudit au moins un troisième dispositif d'actionneur (30).

14. Dispositif électrique pour une bicyclette selon la revendication 8, **caractérisé en ce que** ledit au moins un troisième dispositif d'actionneur (30) est un actionneur de propulsion électrique et ladite pluralité d'états d'actionnement comprend une pluralité de niveaux de puissance qui sont délivrés par ledit actionneur de propulsion électrique.
